# EUROPÄISCHE PATENTSCHRIFT

(11) **EP 2 797 763 B1**
(45) Veröffentlichungstag und Bekanntmachung des Hinweises auf die Patenterteilung: **04.05.2016**
(21) Anmeldenummer: 12822965.5
(22) Anmeldetag: 19.12.2012
(51) Int. Cl.: B60G 13/14, B60G 17/015, B60L 11/00

(54) **FAHRZEUG**
VEHICLE
VEHICULE

(30) Priorität: 27.12.2011 DE 102011057062
(43) Veröffentlichungstag der Anmeldung: 05.11.2014
(73) Patentinhaber: iOLS GmbH, 63065 Offenbach (DE)
(72) Erfinder: SALZMANN, Karl, 65462 Ginsheim (DE); BALL, Knud, 55257 Budenheim (DE)
(74) Vertreter: Klein, Thomas
(86) Internationale Anmeldenummer: PCT/DE2012/100390
(87) Internationale Veröffentlichungsnummer: WO 2013/097844

(56) Entgegenhaltungen:
- CN-Y- 2 679 391
- DE-A1-102009 036 731
- DE-U1-202006 002 854
- JP-A- 2007 195 364
- JP-A- 2009 247 102
- US-A- 1 371 124
- US-A- 4 500 827
- US-A- 4 981 309
- US-A1- 2006 016 629
- US-A1- 2007 175 716
- US-A1- 2010 219 798
- US-A1- 2010 262 308
- US-A1- 2011 227 425

## Beschreibung

Die Erfindung bezieht sich auf ein Fahrzeug, insbesondere Kraftfahrzeug, das mehrere ungefederte Bauteile bildende, um Radachsen drehbare Räder und einen ein gefedertes Bauteil bildenden Fahrzeugaufbau aufweist, mit einer im Fahrzeugaufbau angeordneten Energieerzeugungseinrichtung, durch die eine Bewegung des Fahrzeugaufbaus oder Teilen des Fahrzeugaufbaus in elektrische Energie umsetzbar ist, die einem Akkumulator zuführbar ist, wobei die Energieerzeugungseinrichtung ein Energieabsorbungswandler ist und eine zylindrische Spulenwicklung aufweist, die einen Innenraum umschließt, in dem ein axial magnetisierter Permanentmagnet durch die Bewegung des Fahrzeugaufbaus oder eines Teils des Fahrzeugaufbaus koaxial bewegbar antreibbar angeordnet ist.

Ein derartiges Fahrzeug ist aus der JP 2009 247 102 A bekannt, wobei Energieerzeugungseinrichtungen zwischen den Rädern und dem Fahrzeugaufbau an den Stoßdämpfern angeordnet sind. Diese Energieerzeugungseinrichtungen weisen keine hohe Effizienz auf.

Aus der US 4 500 827 A ist ein Fahrzeug der eingangs genannten Art bekannt, wobei durch Vertikalbewegungen von gefederten und ungefederten Teilen des Fahrzeugs relativ zueinander der oder die Permanentmagnete in der oder den Spulenwicklungen koaxial bewegbar antreibbar sind und die Vertikalbewegungen von gefederten und ungefederten Teilen des Fahrzeugs relativ zueinander über ein oder mehrere Getriebe von dem oder den ungefederten Teilen auf den oder die Permanentmagnete übertragbar sind.

Aufgabe der Erfindung ist es ein Kraftfahrzeug der eingangs genannten Art zu schaffen, bei dem ein Aufladen des Akkumulators mittels einer einfach aufgebauten und mit hoher Effizienz arbeitenden Energieerzeugungseinrichtung erfolgt.

Diese Aufgabe wird erfindungsgemäß dadurch gelöst, daß durch Vertikalbewegungen von gefederten und ungefederten Teilen des Fahrzeugs relativ zueinander der oder die Permanentmagnete in der oder den Spulenwicklungen oder Spulenwicklungspaketen koaxial bewegbar antreibbar sind und die Vertikalbewegungen von gefederten und ungefederten Teilen des Fahrzeugs relativ zueinander über ein oder mehrere Getriebe von dem oder den ungefederten Teilen auf den oder die Permanentmagnete übertragbar und der oder die Permanentmagnete über ein axial federndes Federelement koaxial zur Spulenwicklung oder zum Spulenwicklungspaket bewegbar antreibbar sind.

Dadurch kann der Hub der Relativbewegung zwischen gefedertem und ungefedertem Teil vergrößert auf die Permanentmagnete übertragen werden.

Durch diese Ausbildung wird durch Induktion aufgrund des hin und her bewegten Permanentmagneten eine Wechselspannung erzeugt, die durch schnelle und mit geringer Flußspannung behaftete Dioden rückstromfrei für die Spulenwicklung gleichgerichtet wird. Die Gleichspannung lädt eine Kondensatoranordnung mit einem Ladestrom auf. Diese Kondensatorspannung hat neben dem Glätten der induzierten, hoch frequenten Spannungsimpulse die Hauptaufgabe als Impedanzwandler zu wirken. Durch seinen niedrigen Innenwiderstand ist er das Glied, durch das aus der induzierten Spannung einen Strom zum Laden des Akkumulators konvertiert. Eine Nachladung des Akkumulators erfolgt autark und zwangsweise im Fahrzeug. Auf eine fahrzeugexterne Nachladeeinrichtung und somit eine entsprechende Nachladeinfrastruktur kann verzichtet werden.

Durch die strikte Trennung der Spannungsinduzierung und der nachfolgenden Konvertierung in Strom werden keine auf den Energieabsorbungswandler einwirkenden magnetischen Gegenkräfte erzeugt, so daß die Effizienz der Energieausbeute und somit der Wirkungsgrad sehr hoch ist.

Dabei sind zur Bewegung des Permanentmagneten keine besonderen Kräfte aufzubringen sondern es werden die durch eine Benutzung des Fahrzeugs zwangsläufig entstehenden, auf das Fahrzeug einwirkenden Bewegungen auf den Permanentmagneten, diesen koaxial in der Spulenwicklung bewegend übertragen.

Vorzugsweise ist durch das oder die Getriebe der Relativhub zwischen den gefederten und ungefederten Teilen des Fahrzeugs vergrößert auf den oder die Permanentmagnete übertragbar.

Durch die federnde Anschlußverbindung wird der Antriebshub um einen Zusatzhub verlängert, so daß eine zusätzliche Induktivarbeit gewonnen werden kann. Darüber hinaus absorbiert das Federelement auch Stoß- und Zugkräfte an der Hubstange oder dem Hubrohr und entlastet dadurch die verbindenden Gelenkmechanismen zur Antriebsmechanik der Vertikalbewegungen.

Zu einem einfachen Aufbau führt es, wenn das oder die Getriebe Hebelgetriebe sind.

Zu einer Steigerung der erzeugten Energie führt es, wenn ein Spulenwicklungspaket aus mehreren radial übereinander angeordneten Spulenwicklungen unterschiedlichen Durchmessers koaxial zueinander angeordnet ist, in dessen radial innerster Spulenwicklung der Permanentmagnet koaxial bewegbar angeordnet ist.

Ebenfalls zu einer Steigerung der erzeugten Energie führt es, wenn mehrere Spulenwicklungen oder Spulenwicklungspakete koaxial zueinander angeordnet sind, wobei in jeder Spulenwicklung oder jedem Spulenwicklungspaket ein axial magnetisierter Permanentmagnet koaxial bewegbar angeordnet ist.

Ein negativer Einfluß der Schwerkraft auf den Permanentmagneten wird dadurch vermieden, wenn die Spulen oder Spulenpakete sich annähernd horizontal erstrecken.

Dabei können die Spulen oder Spulenpakete sich in und/oder quer zur Fahrtrichtung des Fahrzeugs erstrecken.

Sind durch Vertikalbewegungen von gefederten und ungefederten Teilen des Fahrzeugs relativ zueinander der oder die Permanentmagnete in der oder den Spulenwicklungen oder Spulenwicklungspaketen koaxial bewegbar antreibbar, so werden diese durch eine Benutzung des Fahrzeugs zwangsläufig entstehenden Relativbewegungen zum Antrieb der Permanentmagnete ausgenutzt. Diese über Federn an den ungefederten Teilen wie z.B. den Radachsen abgestützten gefederten Teile wie z. B. der Fahrzeugaufbau oder Teile davon können sich z.B. während des Fahrbetriebs insbesondere über unebene Fahrwege, durch Beschleunigungen und Verzögerungen des Fahrzeugs, durch Zentrifugalkräfte bei Kurvenfahrten, durch Seitenwindbeaufschlagung oder durch Lastwechselreaktionen des Fahrzeugs aufgrund ihres Gewichts relativ zu den ungefederten Teilen bewegen, wobei diese Relativbewegungen zum Bewegungsantrieb der Permanentmagnete ausgenutzt werden.

Das Fahrwerk des Fahrzeugs muß während des Fahrbetriebs permanent die Unebenheiten des befahrenen Fahrwegs ausgleichen bzw. so weit als möglich neutralisieren. Durch das Fahrzeuggewicht und die ständige Fahrwerksangleichung entsteht eine frei zur Verfügung stehende Energie, die durch den Energieabsorbungswandler in elektrische Energie umsetzbar und dem Akkumulator zuführbar ist.

Solche Relativbewegungen entstehen auch bei einem stehenden Fahrzeug, wenn das Fahrzeug beladen wird oder Personen in das Fahrzeug einsteigen.

Eine weitere Energiegewinnung wird dadurch erreicht, durch auf den Fahrzeugaufbau oder ein Teil des Fahrzeugaufbaus einwirkende positive und/oder negative Beschleunigungen und/oder Zentrifugalkräfte und/oder Gravitationskräfte der oder die Permanentmagnete in der oder den Spulenwicklungen oder Spulenwicklungspaketen koaxial bewegbar antreibbar sind.

Zu einer radial geringen Baugröße führt es, wenn die Spulenwicklung eine auf eine elektrisch isolierende Trägerfolie aufgebrachte Kupferleiterbahn ist.

Vorzugsweise besteht dabei die Kupferleiterbahn aus zumindest weitgehend reinem Kupfer. Durch das nichtmagnetische Kupfer ist an der Spulenwicklung keine magnetische Kraft wirksam, so daß auch keine elektrotechnische Wärmeerzeugung erfolgt.

Ebenfalls eine geringe radiale Baugröße wird erreicht, wenn die Spulenwicklungen eines Spulenwicklungspakets auf elektrisch isolierenden Trägerfolien einer Multilayerfolie aufgebracht sind, wobei dabei gleichzeitig eine elektrische Isolierung der einzelnen Spulen gegeneinander erfolgt.

Zu einer hohen Energieerzeugung bei geringem Gewicht führt es, wenn ein oder mehrere der Permanentmagnete auf einem Magnetträgerrohr angeordnet sind, die in der zylindrischen Spulenwicklung oder dem Spulenwicklungspaket koaxial bewegbar antreibbar sind, wobei sich zwischen dem oder den Permanentmagneten und der zylindrischen Spulenwicklung oder Spulenwicklungspaket ein Luftspalt befindet.

Zu einer besonders einfachen Ausbildung geringen Gewichts führt es dabei, wenn ein oder mehrere der Permanentmagnete als Magnetrohr ausgebildet sind, die in der zylindrischen Spulenwicklung oder dem Spulenwicklungspaket koaxial bewegbar antreibbar sind, wobei sich zwischen der zylindrischen Mantelfläche des oder der Magnetrohre und der zylindrischen Spulenwicklung oder Spulenwicklungspaket ein Luftspalt befindet.

Je kleiner der Luftspalt dabei ist umso höher ist die erzeugbare Energie. Der Luftspalt muß nur so groß sein, daß keine Reibung zwischen dem Permanentmagneten und der zylindrischen Spulenwicklung auftritt, um eine Wärmeerzeugung zu vermeiden.

Bei relativ geringer Wandstärke des Magnetrohres wird von diesem ein Magnetfeld erzeugt, dessen Feldlinien annähern parallel und homogen verlaufen, wodurch eine hohe Effizienz erreicht wird.

Um das Entstehen von Reibungswärme mit erhöhter Sicherheit zu vermeiden, kann der Außenumfang des Magneträgerrohres und des oder der Permanentmagnete oder des Magnetrohres von einer Gleitschicht bedeckt sein, wobei die Gleitschicht eine PTFE-Schicht (Polytetrafluorethylen-Schicht) sein kann, die insbesondere in Nanotechnik aufgebracht ist.

Zur Effizienzsteigerung sind vorteilhafterweise der oder die Permanentmagnete Permanenthartmagnete.

Zum Erreichen eines kompakten, bauraumsparenden Aufbaus können der oder die Permanentmagnete auf einer Hubstange angeordnet sein, die koaxial die Spulenwicklung oder das Spulenwicklungspaket durchragt und durch die Bewegung des Fahrzeugaufbaus oder eines Teils des Fahrzeugaufbaus koaxial bewegbar antreibbar ist, wobei gewichtsparend die Hubstange ein Hubrohr sein kann.

Zu einer weiteren Gewichtsreduzierung ohne Stabilitätsverlust führt es, wenn das Hubrohr aus einem Werkstoff geringeren spezifischen Gewichts als Stahl, insbesondere aus Titan oder einer Titanlegierung besteht.

Um dabei die Biegesteifigkeit ohne wesentlichen Gewichtszuwachs zu erhöhen, kann in dem Inneren des Hubrohres eine Stützstruktur aus einem Werkstoff geringeren spezifischen Gewichts als Stahl angeordnet sein, die eine wabenartige Struktur sein und aus Carbon bestehen kann.

Durch diese Biegesteifigkeit wird auch bei relativ langen Hubrohren eine mechanische Reibung der Permanentmagnete an der Spulenwicklung und damit eine Wärmeerzeugung weitgehend vermieden, so daß die Permanentmagnete in der Spulenwicklung schwebend axial bewegbar sind.

Zur Befestigung des Magnetträgerrohres oder des Magnetrohres auf der Hubstange oder dem Hubrohr kann das Magnetträgerrohr oder das Magnetrohr über Trägerteile auf der Hubstange oder dem Hubrohr angeordnet sein, die insbesondere in den axialen Endbereichen von Magnetträgerrohr oder Magnetrohr angeordnet sind.

Damit Luftwiderstände die möglichst freie axiale Bewegbarkeit der Permanentmagnete nicht behindern, können die Trägerteile zumindest weitgehend axial luftdurchlässig sein.

Die Trägerteile können gewichtsreduzierend aus einem Kunststoff bestehen.

Zur axialen Bewegbarkeit ist das Magnetträgerrohr oder das Magnetrohr koaxial bewegbar gelagert, wobei die Lagerwiderstände besonders gering sind, wenn das Magnetträgerrohr oder das Magnetrohr in Gleitrollenlagern koaxial bewegbar gelagert ist.

Weist das Kraftfahrzeug einen Elektromotor zum Fahrantrieb auf, dessen Energieversorgung durch den Akkumulator erfolgt, so kann die Antriebsenergie zumindest weitgehend, wenn nicht sogar vollständig autark und emissionsfrei, insbesondere CO₂-emissionsfrei in dem Kraftfahrzeug erzeugt werden.

Aufgrund der hohen Effizienz der Energieerzeugung sind relativ große, unter Umständen sogar unbegrenzte Reichweiten des Kraftfahrzeugs erreichbar.

Die Hubstange oder das Hubrohr können über das axial federnde Federelement koaxial zur Spulenwicklung oder zum Spulenwicklungspaket bewegbar antreibbar sein.

Bei einem Bewegungsantrieb der Permanentmagnete durch auf den Fahrzeugaufbau oder ein Teil des Fahrzeugaufbaus einwirkende positive und/oder negative Beschleunigungen und/oder Zentrifugalkräfte und/oder Gravitationskräfte können der oder die in der Spulenwicklung koaxial bewegbaren Permanentmagnete von einem axial federnden Federelement beaufschlagbar sind.

Das Federelement kann dabei eine Zugfeder oder eine Zug-/druckfeder, insbesondere eine Schraubenzugfeder oder eine Schraubenzug-/druckfeder sein.

Das Fahrzeug kann ein Chassis oder einen Kastenrahmen mit einem Bodenbereich aufweisen, in dem ein oder mehrere zylindrische Spulenwicklungen oder Spulenwicklungspakete angeordnet sind, in denen die axial magnetisierten Permanentmagnete koaxial bewegbar antreibbar angeordnet sind.

Ausführungsbeispiele der Erfindung sind in der Zeichnung dargestellt und werden im Folgenden näher beschrieben. Es zeigen
- Figur 1: eine Prinzipdarstellung eines Ausschnitts eines Kraftfahrzeugs mit einem ersten Energieabsorberwandler
- Figur 2: eine Prinzipdarstellung eines Ausschnitts eines Kraftfahrzeugs mit einem ersten Energieabsorberwandler
- Figur 3: einen vergrößerten Ausschnitt des Energieabsorberwandlers nach den Figuren 1 und 2

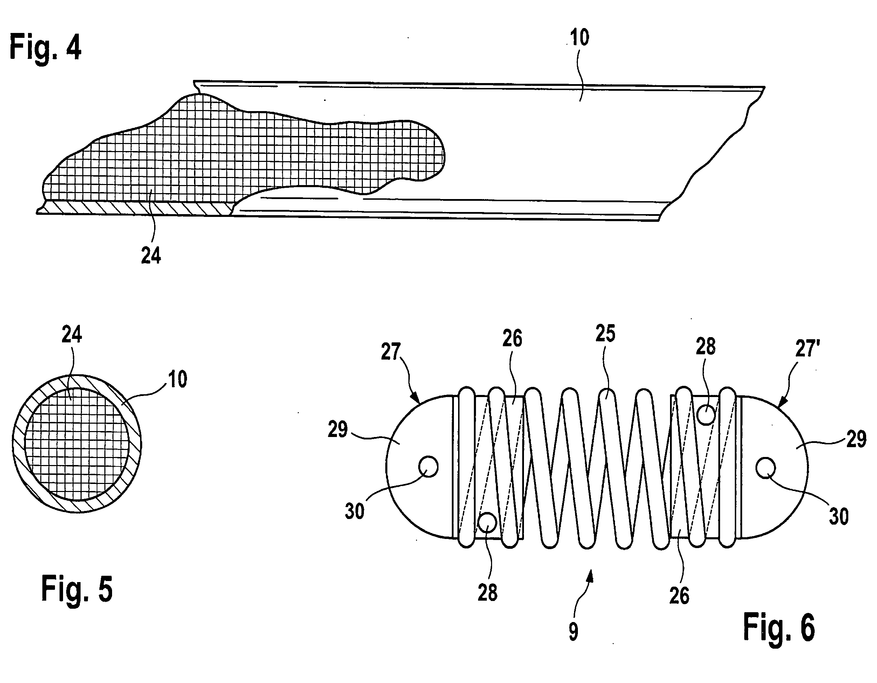

- Figur 4: eine vergößerte Seitenansicht eines Hubrohres des Energieabsorberwandlers nach den Figuren 1 und 2
- Figur 5: das Hubrohr nach Figur 4 im Querschnitt
- Figur 6: eine Seitenansicht eines Zug-/Druckfederelements des Energieabsorberwandlers nach den Figuren 1 und 2.

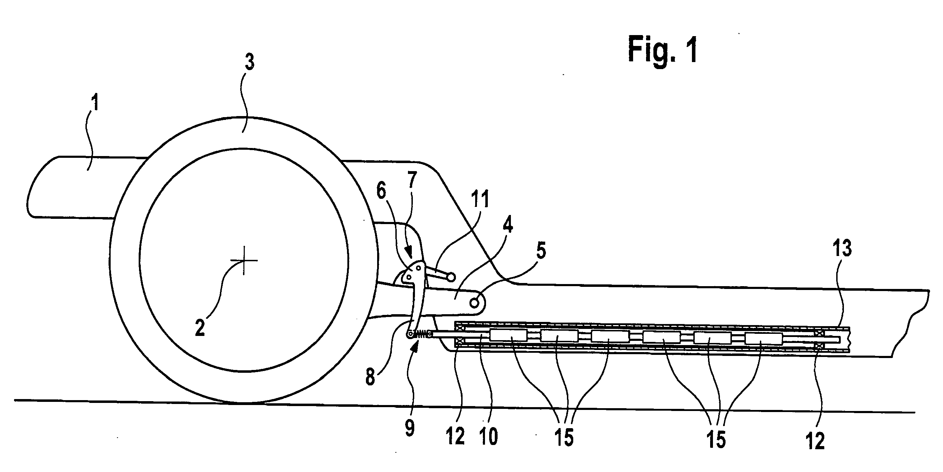

In Figur 1 ist ein Chassis 1 eines Kraftfahrzeugs über nicht dargestellte Federeinheiten an einer Radachse 1 eines Rades 3 abgestützt, so daß sich bei Benutzung des Kraftfahrzeugs Vertikalbewegungen von Chassis 1 und Radachse 2 relativ zueinander ergeben.

Die Radachse 2 ist über Hinterachslängslenker 4 an dem Chassis 1 um eine Schwenkachse 5 quer zur Längserstreckung des Kraftfahrzeugs schwenkbar angelenkt.

An dem Hinterachslenker 4 ist das freie Ende eines kleinen Hebelarms 6 eines zweiarmigen Hebels 7 angelenkt und durch Schwenkbewegen des Hinterachslängslenkers 4 annähernd vertikal bewegbar.

Das freie Ende des großen Hebelarms 8 des zweiarmigen Hebels 7, der sich annähernd senkrecht erstreckt, ist über ein Zug-/Druckfederelement 9 mit einem Ende eines sich in Fahrzeuglängserstreckung gerichteten Hubrohres 10 verbunden.

Der Verbindungsbereich von kleinem und großem Hebelarm 6, 8 ist über eine sich annähernd in Fahrzeuglängserstreckung gerichtete Koppel 11 an dem Chassis 1 angelenkt.

Kommt es zu relativen Vertikalbewegungen von Radachse 2 und Chassis 1 während des Fahrbetriebs des Kraftfahrzeugs oder durch Be- oder Entlasten des Kraftfahrzeugs, so wird durch das von dem zweiarmigen Hebel 7 und der Koppel 11 gebildeten Hebelgetriebe der von dem Hinterachslängslenker 4 auf den kleinen Hebelarm 6 ausgeübte annähernd Vertikalhub als vergrößerter annähernd horizontaler Hub über das Zug-/Druck-federelement 9 auf das Hubrohr 10 übertragen.

Das Hubrohr 10 ist durch Gleitrollenlager 12 in einem Induktorrohr 13 koaxial bewegbar gelagert, wobei das aus Aluminium bestehende Induktorrohr 13 mittels nicht dargestellter Durchführtüllen aus thermoplastischen Gummi im Bodenbereich des Chassis 1 angeordnet ist.

An der Innenwand des Induktorrohres 13 ist ein Spulenwicklungspaket 14 angeordnet, das sich über die ganze Länge des Induktorrohres 13 erstreckt.

Auf dem Hubrohr 10 sind in Abständen zueinander sechs als Magnetrohre 15 ausgebildete, axial magnetisierte Permanentmagnete angeordnet, zwischen deren zylindrischer Mantelfläche und der inneren Spulenwicklung des Spulenwicklungspaketes 14 ein ringförmiger Luftspalt 16 vorhanden ist.

Durch das Hin- und Herbewegen des Hubrohres 10, angetrieben über den zweiarmigen Hebel 7 von dem Hinterachslängslenker 4, werden von dem Hubrohr 10 ebenfalls axial hin- und herbewegten Magnetrohren 15 durch Induktion in den Spulenwicklungen des Spulenwicklungspakets 14 Wechselspannungen erzeugt, die zum Laden eines nicht dargestellten Akumulators des Kraftfahrzeugs genutzt werden.

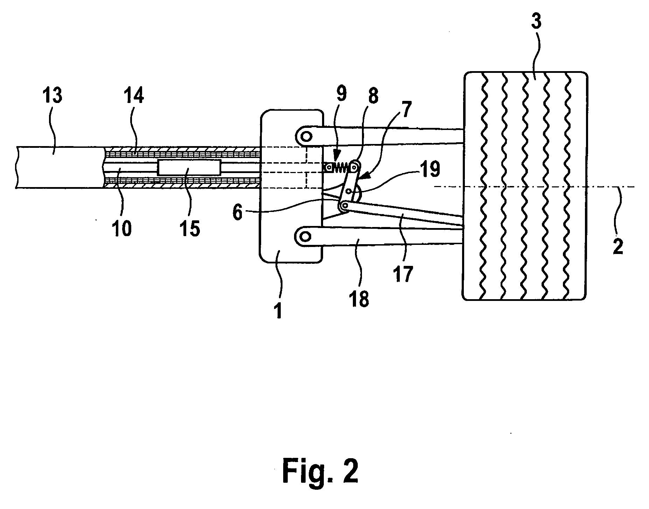

Bei dem Ausführungsbeispiel der Figur 2 ist eine Umlenkstange 17 mit ihrem einen Ende nahe an einem Rad 3 an einem Vorderachsquerlenker 18 angelenkt und überträgt die Vertikalbewegungen des Vorderachslenkers 18 auf den kleinen Hebelarm 6 eines zweiarmigen Hebels 7, an den das andere Ende der Umlenkstange 17 angelenkt ist.

Der zweiarmige Hebel 17 ist an einem Teil des Chassis 1 um eine in Längserstreckung des Kraftfahrzeugs gerichtete Achse 19 schwenkbar gelagert.

Das freie Ende des großen Hebelarms 8 des zweiarmigen Hebels 7 ist entsprechend Figur 1 über ein Zug-/Druckfederelement 9 mit einem aus Reintitan bestehenden Hubrohr 10 verbunden.

Entsprechend Figur 1 ist das Hubrohr 10 mit Magnetrohren 15 versehen und in einem sich quer zur Fahrzeuglängserstreckung erstreckenden Induktorrohr 13 koaxial hin- und herbewegbar geführt.

Entsprechen Figur 1 ist das Induktorrohr 13 auch mit einem Spulenwicklungspaket 14 versehen.

Die Funktion des Ausführungsbeispiels der Figur 2 entspricht der Funktion des Ausführungsbeispiels der Figur 1.

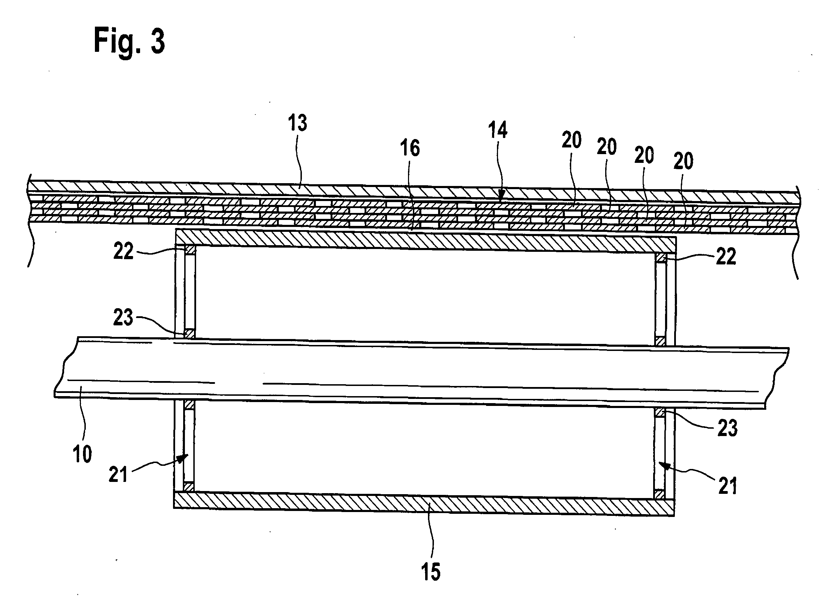

Wie in Figur 3 dargestellt, besteht das Spulenwicklungspaket 14 aus einer Mulitlayerfolie, die vier koaxial zueinander angeordnete Spulenwicklungen 20 in Form von aufgebrachten Kupferleiterbahnen aufweist.

Die axial magnetisierten, aus Permanenthartmagnet-Material bestehenden Magnetrohre 15 sind an ihren beiden axialen Enden jeweils über ein Trägerteil 21 aus einem Kunststoff mit dem Hubrohr 10 verbunden.

Die Trägerteile 21 weisen einen mit der zylindrischen Innenwand des Magnetrohres 15 verbunden Außenring 22 und einen mit dem Hubrohr 10 verbundenen Innenring 23 auf, wobei Außenring 22 und Innenring durch nicht dargestellte Speichen miteinander verbunden sind.

Dadurch sind die Trägerteile 21 axial weitgehend luftdurchlässig, so daß bei der Axialbewegung der Magnetrohre 15 weitgehend kein die Bewegung dämpfender Luftwiderstand zu überwinden ist.

Da auch durch den Luftspalt 16 kein Reibwiderstand zwischen den Magnetrohren 15 und dem Spulenwicklungspaket 14 zu überwinden ist, schweben die Magnetrohre 15 weitgehend widerstandslos in dem Spulenpaket 14.

Damit das Hubrohr 10 bei geringem Gewicht mit hoher Sicherheit sich nicht aus seiner koaxialen Lage verbiegen kann, ist sein Inneres mit einer wabenartigen Stützstruktur 24 aus Karbon ausgefüllt.

Das Zug-/Druckelement 9 weist eine zylindrische Zug-/Druckfeder 25 auf. In jedes axiale Ende der Zug-/Druckfeder 25 ist ein entsprechendes Gewindeteil 26 eines Anschlußstücks 27 eingeschraubt und durch einen radial vom Gewindeteil 26 zwischen zwei Federwindungen ragenden Querbolzen 28 gegen selbsttätiges Lösen gesichert.

Die aus der Zug-/Druckfeder 25 herausragenden Anschlußenden 29 der Anschlußstücke 27, 27' weisen eine Querbohrung 30 auf, über die das eine Anschlußstück 27 an dem großen Hebelarm 8 und das andere Anschlußstück 27' an dem Hubrohr 10 angelenkt ist.

Es versteht sich, daß zur Erhöhung der erzeugbaren elektrischen Energie mehrere Induktorrohre 13 mit darin bewegbaren Hubrohren 10 vorzugsweise parallel zueinander angeordnet sein können.

### Bezugszeichenliste

- 1: Chassis
- 2: Radachse
- 3: Rad
- 4: Hinterachslängslenker
- 5: Schwenkachse
- 6: kleiner Hebelarm
- 7: zweiarmiger Hebel
- 8: großer Hebelarm
- 9: Zug-/Druckfederelement
- 10: Hubrohr
- 11: Koppel
- 12: Gleitrollenlager
- 13: Induktorrohr
- 14: Spulenwicklungspaket
- 15: Magnetrohre
- 16: Luftspalt
- 17: Umlenkstange
- 18: Vorderachsquerlenker
- 19: Achse
- 20: Spulenwicklungen
- 21: Trägerteil
- 22: Außenring
- 23: Innenring
- 24: Stützstruktur
- 25: Zug-/Druckfeder
- 26: Gewindeteil
- 27: Anschlußstück
- 27': Anschlußstück
- 28: Querbolzen
- 29: Anschlußende
- 30: Querbohrung

## Patentansprüche

1. Fahrzeug, insbesondere Kraftfahrzeug, das mehrere ungefederte Bauteile (2,3) bildende, um Radachsen (2) drehbare Räder (3) und einen ein gefedertes Bauteil bildenden Fahrzeugaufbau (1) aufweist, mit einer im Fahrzeugaufbau (1) angeordneten Energieerzeugungseinrichtung (13), durch die eine Bewegung des Fahrzeugaufbaus (1) oder Teilen des Fahrzeugaufbaus in elektrische Energie umsetzbar ist, die einem Akkumulator zuführbar ist, wobei die Energieerzeugungseinrichtung (13) ein Energie-absorbungswandler ist und eine zylindrische Spulenwicklung (20) aufweist, die einen Innenraum umschließt, in dem ein axial magnetisierter Permanentmagnet (15) durch die Bewegung des Fahrzeugaufbaus (1) oder eines Teils des Fahrzeugaufbaus (1) koaxial bewegbar antreibbar angeordnet ist, **dadurch gekennzeichnet, daß** durch Vertikal-bewegungen von gefederten und ungefederten Teilen des Fahrzeugs relativ zueinander der oder die Permanentmagnete (15) in der oder den Spulenwicklungen (20) oder Spulenwicklungspaketen (14) koaxial bewegbar antreibbar sind und die Vertikalbewegungen von gefederten und ungefederten Teilen des Fahrzeugs relativ zueinander über ein oder mehrere Getriebe (6,7,8) von dem oder den ungefederten Teilen auf den oder die Permanentmagnete (15) übertragbar und der oder die Permanentmagnete (15) über ein axial federndes Federelement (9) koaxial zur Spulenwicklung (20) oder zum Spulenwicklungspaket (14) bewegbar antreibbar sind.

2. Fahrzeug nach Anspruch 1, **dadurch gekennzeichnet, daß** durch das oder die Getriebe (6,7,8) der Relativhub zwischen den gefederten und ungefederten Teilen des Fahrzeugs vergrößert auf den oder die Permanentmagnete (15) übertragbar ist.

3. Fahrzeug nach einem der vorhergehenden Ansprüche, **dadurch gekennzeichnet, daß** ein Spulenwicklungspaket (14) aus mehreren radial übereinander angeordneten Spulenwicklungen (20) unterschiedlichen Durchmessers koaxial zueinander angeordnet ist, in dessen radial innerster Spulenwicklung der Permanentmagnet (15) koaxial bewegbar angeordnet ist.

4. Fahrzeug nach einem der vorhergehenden Ansprüche, **dadurch gekennzeichnet, daß** mehrere Spulenwicklungen (20) oder Spulenwicklungspakete (14) koaxial zueinander angeordnet sind, wobei in jeder Spulenwicklung (20) oder jedem Spulenwicklungspaket (14) ein axial magnetisierter Permanentmagnet (15) koaxial bewegbar angeordnet ist.

5. Fahrzeug nach einem der vorhergehenden Ansprüche, **dadurch gekennzeichnet, daß** die Spulen (20) oder Spulenpakete (14) sich annähernd horizontal erstrecken.

6. Fahrzeug nach Anspruch **5, dadurch gekennzeichnet, daß** die Spulen oder Spulenpakete (14) sich in und/oder quer zur Fahrtrichtung des Fahrzeugs erstrecken.

7. Fahrzeug nach einem der vorhergehenden Ansprüche, **dadurch gekennzeichnet, daß** durch auf den Fahrzeugaufbau oder ein Teil des Fahrzeugaufbaus (1) einwirkende positive und/oder negative Beschleunigungen und/oder Zentrifugalkräfte und/oder Gravitationskräfte der oder die Permanentmagnete (15) in der oder den Spulenwicklungen oder Spulenwicklungspaketen (14) koaxial bewegbar antreibbar sind.

8. Fahrzeug nach einem der vorhergehenden Ansprüche, **d ad u rch gekennzeichnet,** daß die Spulenwicklung (20) eine auf eine elektrisch isolierende Trägerfolie aufgebrachte Kupferleiterbahn ist.

9. Fahrzeug nach einem der vorhergehenden Ansprüche, **dadurch gekennzeichnet, daß** ein oder mehrere der Permanentmagnete (15) auf einem Magnetträgerrohr angeordnet sind, die in der zylindrischen Spulenwicklung (20) oder dem Spulenwicklungspaket (14) koaxial bewegbar antreibbar sind, wobei sich zwischen dem oder den Permanentmagneten und der zylindrischen Spulenwicklung oder Spulenwicklungspaket ein Luftspalt (16) befindet.

10. Fahrzeug nach einem der Ansprüche 1 bis 8, dad u rch **gekennzeichnet**, daß ein oder mehrere der Permanentmagnete (15) als Magnetrohr (15) ausgebildet sind, die in der zylindrischen Spulenwicklung (20) oder dem Spulenwicklungspaket (14) koaxial bewegbar antreibbar sind, wobei sich zwischen der zylindrischen Mantelfläche des oder der Magnetrohre (15) und der zylindrischen Spulenwicklung oder Spulenwicklungspaket (14) ein Luftspalt (16) befindet.

11. Fahrzeug nach einem der vorhergehenden Ansprüche, **dadurch gekennzeichnet, daß** der oder die Permanentmagnete auf einer Hubstange (10) angeordnet sind, die koaxial die Spulenwicklung oder das Spulenwicklungspaket (14) durchragt und durch die Bewegung des Fahrzeugaufbaus oder eines Teils des Fahrzeugaufbaus koaxial bewegbar antreibbar ist.

12. Fahrzeug nach Anspruch 11, **dadurch gekennzeichnet, daß** die Hubstange ein Hubrohr (10) ist.

13. Fahrzeug nach Anspruch 12, **dadurch gekennzeichnet, daß** das Hubrohr (10) aus einem Werkstoff geringeren spezifischen Gewichts als Stahl besteht.

14. Fahrzeug nach einem der Ansprüche 9 bis 13, **dadurch gekennzeichnet, daß** das Magnetträgerrohr oder das Magnetrohr (15) über Trägerteile (21) auf der Hubstange oder dem Hubrohr (10) angeordnet ist.

15. Fahrzeug nach Anspruch 14, **dadurch gekennzeichnet, daß** die Trägerteile (10) zumindest weitgehend axial luftdurchlässig sind.

16. Fahrzeug nach einem der vorhergehenden, **dadurch gekennzeichnet, daß** die Spulenwicklung oder das Spulenwicklungspaket (14) von einem an dem Fahrzeugaufbau (1) oder einem Teil des Fahrzeugaufbaus (1) angeordneten Induktorrohr (13) umschlossen ist.

17. Fahrzeug nach einem der Ansprüche 9 bis 16, **dadurch gekennzeichnet, daß** das Magnetträgerrohr oder das Magnetrohr (15) koaxial bewegbar gelagert ist.

18. Fahrzeug nach einem der vorhergehenden Ansprüche, **dadurch gekennzeichnet, daß** das Kraftfahrzeug einen Elektromotor zum Fahrantrieb aufweist, dessen Energieversorgung durch den Akkumulator erfolgt.

19. Fahrzeug nach einem der Ansprüche 11 und 12, **dadurch gekennzeichnet, daß** die Hubstange oder das Hubrohr (10) über das axial federnde Federelement koaxial zur Spulenwicklung oder zum Spulenwicklungspaket (14) bewegbar antreibbar sind.

20. Fahrzeug nach einem der Ansprüche 7 bis 18, **dadurch gekennzeichnet, daß** der oder die in der Spulenwicklung oder dem Spulenwicklungspaket (14) koaxial bewegbaren Permanentmagnete (15) von einem axial federnden Federelement (9) beaufschlagbar sind.

21. Fahrzeug nach einem der vorhergehenden Ansprüche, **dadurch gekennzeichnet, daß** das Fahrzeug ein Chassis (1) oder einen Kastenrahmen mit einem Bodenbereich aufweist, in dem ein oder mehrere zylindrische Spulenwicklungen oder Spulenwicklungspakete (14) angeordnet sind, in denen die axial magnetisierten Permanentmagnete (15) koaxial bewegbar antreibbar angeordnet sind.

## Claims

1. Vehicle, in particular motor vehicle, which has a plurality of wheels (3), which form unsprung components (2, 3) and can rotate about wheel axles (2), and a vehicle structure (1) which forms a sprung component, having an energy generation device (13) which is arranged in the vehicle structure (1) and by means of which a movement of the vehicle structure (1) or parts of the vehicle structure can be converted into electrical energy which can be supplied to a rechargeable battery, wherein the energy generation device (13) is an energy absorption converter and has a cylindrical coil winding (20) which surrounds an interior space in which an axially magnetized permanent magnet (15) is arranged such that it can be driven in a coaxially movable manner by the movement of the vehicle structure (1) or a part of the vehicle structure (1), **characterized in that** the permanent magnet or permanent magnets (15) in the coil winding or coil windings (20) or coil winding stacks (14) can be driven in a coaxially movable manner by vertical movements of sprung and unsprung parts of the vehicle relative to one another and the vertical movements of sprung and unsprung parts of the vehicle relative to one another can be transmitted from the unsprung part or unsprung parts to the permanent magnet or permanent magnets (15) by means of one or more gear mechanisms (6, 7, 8), and the permanent magnet or permanent magnets (15) can be driven in a movable manner coaxially to the coil winding (20) or to the coil winding stack (14) by means of an axially sprung spring element (9).

2. Vehicle according to Claim 1, **characterized in that** the relative travel between the sprung and unsprung parts of the vehicle can be transmitted to the permanent magnet or permanent magnets (15) in an amplified manner by the gear mechanism or gear mechanisms (6, 7, 8).

3. Vehicle according to either of the preceding claims, **characterized in that** a coil winding stack (14) comprising a plurality of coil windings (20) which are arranged radially one above the other and have different diameters coaxially in relation to one another is provided, the permanent magnet (15) being arranged in a coaxially movable manner in the radially innermost coil winding of the said coil winding stack.

4. Vehicle according to one of the preceding claims, **characterized in that** a plurality of coil windings (20) or coil winding stacks (14) are arranged coaxially in relation to one another, wherein an axially magnetized permanent magnet (15) is arranged in a coaxially movable manner in each coil winding (20) or each coil winding stack (14).

5. Vehicle according to one of the preceding claims, **characterized in that** the coils (20) or coil stacks (14) extend approximately horizontally.

6. Vehicle according to Claim 5, **characterized in that** the coils or coil stacks (14) extend in and/or transverse to the direction of travel of the vehicle.

7. Vehicle according to one of the preceding claims, **characterized in that** the permanent magnet or permanent magnets (15) in the coil winding or coil windings or coil winding stacks (14) can be driven in a coaxially movable manner by positive and/or negative accelerations and/or centrifugal forces and/or gravitational forces which act on the vehicle structure or a part of the vehicle structure (1).

8. Vehicle according to one of the preceding claims, **characterized in that** the coil winding (20) is a copper conductor track which is applied to an electrically insulating carrier sheet.

9. Vehicle according to one of the preceding claims, **characterized in that** one or more of the permanent magnets (15) is/are arranged on a magnet carrier tube, which permanent magnets can be driven in a coaxially movable manner in the cylindrical coil winding (20) or the coil winding stack (14), wherein there is an air gap (16) between the permanent magnet or permanent magnets and the cylindrical coil winding or coil winding stack.

10. Vehicle according to one of Claims 1 to 8, **characterized in that** one or more of the permanent magnets (15) is/are in the form of a magnet tube (15), which permanent magnets can be driven in a coaxially movable manner in the cylindrical coil winding (20) or the coil winding stack (14), wherein there is an air gap (16) between the cylindrical casing surface of the magnet tube or magnet tubes (15) and the cylindrical coil winding or coil winding stack (14).

11. Vehicle according to one of the preceding claims, **characterized in that** the permanent magnet or permanent magnets is/are arranged on a lifting rod (10) which projects coaxially through the coil winding or the coil winding stack (14) and can be driven in a coaxially movable manner by the movement of the vehicle structure or a part of the vehicle structure.

12. Vehicle according to Claim 11, **characterized in that** the lifting rod is a lifting tube (10).

13. Vehicle according to Claim 12, **characterized in that** the lifting tube (10) is composed of a material with a lower specific weight than steel.

14. Vehicle according to one of Claims 9 to 13, **characterized in that** the magnet carrier tube or the magnet tube (15) is arranged on the lifting rod or the lifting tube (10) by means of carrier parts (21).

15. Vehicle according to Claim 14, **characterized in that** the carrier parts (10) are at least largely axially permeable to air.

16. Vehicle according to one of the preceding claims, **characterized in that** the coil winding or the coil winding stack (14) is surrounded by an inductor tube (13) which is arranged on the vehicle structure (1) or a part of the vehicle structure (1).

17. Vehicle according to one of Claims 9 to 16, **characterized in that** the magnet carrier tube or the magnet tube (15) is mounted in a coaxially movable manner.

18. Vehicle according to one of the preceding claims, **characterized in that** the motor vehicle has an electric motor for driving purposes, energy being supplied to the said electric motor by the rechargeable battery.

19. Vehicle according to either of Claims 11 and 12, **characterized in that** the lifting rod or the lifting tube (10) can be driven in a movable manner coaxially to the coil winding or to the coil winding stack (14) by means of the axially sprung spring element.

20. Vehicle according to one of Claims 7 to 18, **characterized in that** the permanent magnet or permanent magnets (15) which can be coaxially moved in the coil winding or the coil winding stack (14) can be acted on by an axially sprung spring element (9).

21. Vehicle according to one of the preceding claims, **characterized in that** the vehicle has a chassis (1) or a box-type frame with a bottom region in which one or more cylindrical coil windings or coil winding stacks (14) are arranged, the axially magnetized permanent magnets (15) being arranged in the said coil windings or coil winding stacks such that they can be driven in a coaxially movable manner.

## Revendications

1. Véhicule, en particulier véhicule automobile, qui présente plusieurs roues (3) pouvant tourner autour d'axes de roues (2), formant des composants non suspendus sur ressort (2, 3), et une caisse de véhicule (1) formant un composant à suspension à ressort, avec un dispositif de génération d'énergie (13) disposé dans la caisse du véhicule (1), par le biais duquel un mouvement de la caisse du véhicule (1) ou de parties de la caisse du véhicule peut être converti en énergie électrique qui peut être transférée à un accumulateur, le dispositif de génération d'énergie (13) étant un convertisseur à absorption d'énergie et présentant un enroulement de bobine cylindrique (20) qui entoure un espace interne dans lequel est disposé un aimant permanent à aimantation axiale (15), de manière à pouvoir être entraîné en mouvement coaxial par le mouvement de la caisse du véhicule (1) ou d'une partie de la caisse du véhicule (1), **caractérisé en ce que** par des mouvements verticaux de pièces du véhicule suspendues et non suspendues sur ressort les unes par rapport aux autres, le ou les aimants permanents (15) peuvent être entraînés de manière déplaçable coaxialement dans l'enroulement ou les enroulements de bobine (20) ou les paquets d'enroulements de bobine (14) et les mouvements verticaux de pièces du véhicule suspendues et non suspendues sur ressort les unes par rapport aux autres peuvent être transmis par le biais d'une ou plusieurs transmissions (6, 7, 8) par la ou les pièces non suspendues sur ressort à l'aimant ou aux aimants permanents (15) et le ou les aimants permanents (15) peuvent être entraînés par le biais d'un élément de ressort à suspension axiale (9) coaxialement par rapport à l'enroulement de bobine (20) ou par rapport au paquet d'enroulements de bobine (14).

2. Véhicule selon la revendication 1, **caractérisé en ce que** par la ou les transmissions (6, 7, 8), la course relative entre les pièces du véhicule suspendues et non suspendues sur ressort peut être transmise de manière accentuée à l'aimant ou aux aimants permanents (15).

3. Véhicule selon l'une quelconque des revendications précédentes, **caractérisé en ce qu'**il est prévu un paquet d'enroulements de bobine (14) constitué de plusieurs enroulements de bobine (20) de différents diamètres disposés radialement les uns au-dessus des autres coaxialement les uns par rapport aux autres, dans l'enroulement de bobine le plus radialement interne duquel est disposé de manière déplaçable coaxialement l'aimant permanent (15).

4. Véhicule selon l'une quelconque des revendications précédentes, **caractérisé en ce que** plusieurs enroulements de bobine (20) ou paquets d'enroulements de bobine (14) sont disposés coaxialement les uns par rapport aux autres, un aimant permanent à aimantation axiale (15) étant disposé de manière déplaçable coaxialement dans chaque enroulement de bobine (20) ou chaque paquet d'enroulements de bobine (14).

5. Véhicule selon l'une quelconque des revendications précédentes, **caractérisé en ce que** les bobines (20) ou les paquets de bobines (14) s'étendent approximativement horizontalement.

6. Véhicule selon la revendication 5, **caractérisé en ce que** les bobines ou les paquets de bobines (14) s'étendent dans et/ou transversalement à la direction de conduite du véhicule.

7. Véhicule selon l'une quelconque des revendications précédentes, **caractérisé en ce que** par des accélérations positives et/ou négatives et/ou des forces centrifuges et/ou des forces gravitationnelles agissant sur la caisse du véhicule ou sur une partie de la caisse du véhicule (1), le ou les aimants permanents (15) peuvent être entraînés de manière déplaçable coaxialement dans l'enroulement ou les enroulements de bobine ou les paquets d'enroulements de bobine (14).

8. Véhicule selon l'une quelconque des revendications précédentes, **caractérisé en ce que** l'enroulement de bobine (20) est une piste conductrice en cuivre appliquée sur un film de support électriquement isolant.

9. Véhicule selon l'une quelconque des revendications précédentes, **caractérisé en ce qu'**un ou plusieurs des aimants permanents (15) sont disposés sur un tube de support magnétique, lesquels tubes de support magnétique peuvent être entraînés de manière déplaçable coaxialement dans l'enroulement de bobine cylindrique (20) ou le paquet d'enroulements de bobine (14), un entrefer (16) étant situé entre l'aimant ou les aimants permanents et l'enroulement de bobine cylindrique ou le paquet d'enroulements de bobine.

10. Véhicule selon l'une quelconque des revendications 1 à 8, **caractérisé en ce qu'**un ou plusieurs des aimants permanents (15) sont réalisés sous forme de tubes magnétiques (15) qui peuvent être entraînés de manière déplaçable coaxialement dans l'enroulement de bobine cylindrique (20) ou le paquet d'enroulements de bobine (14), un entrefer (16) étant situé entre la surface d'enveloppe cylindrique du ou des tubes magnétiques (15) et l'enroulement de bobine cylindrique ou le paquet d'enroulements de bobine (14).

11. Véhicule selon l'une quelconque des revendications précédentes, **caractérisé en ce que** le ou les aimants permanents sont disposés sur une tige de levage (10) qui traverse coaxialement l'enroulement de bobine ou le paquet d'enroulements de bobine (14) et qui peut être entraînée de manière déplaçable coaxialement par le mouvement de la caisse du véhicule ou d'une partie de la caisse du véhicule.

12. Véhicule selon la revendication 11, **caractérisé en ce que** la tige de levage est un tube de levage (10).

13. Véhicule selon la revendication 12, **caractérisé en ce que** le tube de levage (10) se compose d'un matériau de plus faible poids spécifique que l'acier.

14. Véhicule selon l'une quelconque des revendications 9 à 13, **caractérisé en ce que** le tube de support magnétique ou le tube magnétique (15) est disposé par le biais de pièces de support (21) sur la tige de levage ou le tube de levage (10).

15. Véhicule selon la revendication 14, **caractérisé en ce que** les pièces de support (10) sont au moins essentiellement axialement perméables à l'air.

16. Véhicule selon l'une quelconque des revendications précédentes, **caractérisé en ce que** l'enroulement de bobine ou le paquet d'enroulements de bobine (14) est entouré par un tube inducteur (13) disposé sur la caisse du véhicule (1) ou sur une partie de la caisse du véhicule (1).

17. Véhicule selon l'une quelconque des revendications 9 à 16, **caractérisé en ce que** le tube de support magnétique ou le tube magnétique (15) est supporté de manière déplaçable coaxialement.

18. Véhicule selon l'une quelconque des revendications précédentes, **caractérisé en ce que** le véhicule présente un moteur électrique pour l'entraînement de conduite, dont l'alimentation en énergie s'effectue par le biais de l'accumulateur.

19. Véhicule selon l'une quelconque des revendications 11 et 12, **caractérisé en ce que** la tige de levage ou le tube de levage (10) peuvent être entraînés de manière déplaçable par le biais de l'élément de ressort à suspension axiale coaxialement par rapport à l'enroulement de bobine ou par rapport au paquet d'enroulements de bobine (14).

20. Véhicule selon l'une quelconque des revendications 7 à 18, **caractérisé en ce que** le ou les aimants permanents (15) déplaçables coaxialement dans l'enroulement de bobine ou dans le paquet d'enroulements de bobine (14) peuvent être sollicités par un élément de ressort à suspension axiale (9).

21. Véhicule selon l'une quelconque des revendications précédentes, **caractérisé en ce que** le véhicule présente un châssis (1) ou un cadre de caisse avec une région de plancher dans laquelle sont disposés un ou plusieurs enroulements de bobine cylindriques ou paquets d'enroulements de bobine (14) dans lesquels sont disposés les aimants permanents à aimantation axiale (15) de manière à pouvoir être entraînés de manière déplaçable coaxialement.
